# EUROPÄISCHE PATENTANMELDUNG

(11) **EP 2 894 369 A1**
(43) Veröffentlichungstag der Anmeldung: **15.07.2015**
(21) Anmeldenummer: 14150520.6
(22) Anmeldetag: 09.01.2014
(51) Int. Cl.: F16F 13/00, F16B 13/00

(54) **Schlitzdübel**

(71) Anmelder: HILTI Aktiengesellschaft, 9494 Schaan (LI)
(72) Erfinder: Melzer, Lars, 86978 Hohenfurch (DE)
(74) Vertreter: Hilti Aktiengesellschaft Corporate Intellectual Property

(57) **Zusammenfassung**

Befestigungselement zur Befestigung an einem Werkstoff, beispielsweise Beton, Ziegel oder ähnlichem, enthaltend wenigstens einen Befestigungsabschnitt, welcher in einem Werkstoff positionierbar ist, und wenigstens einen Anbindungsabschnitt.

Der Befestigungsabschnitt enthält mindestens eine im Wesentlichen zylindrische Form und ist dazu geeignet, in eine zu dem Befestigungsabschnitt korrespondierende schlitzförmige Öffnung in dem Werkstoff positioniert zu werden.

## Beschreibung

Die vorliegende Erfindung betrifft ein Befestigungselement zur Befestigung an einem Werkstoff, beispielsweise Beton, Ziegel oder ähnlichem, enthaltend wenigstens einen Befestigungsabschnitt, welcher in einem Werkstoff positionierbar ist, und wenigstens einen Anbindungsabschnitt.

Üblicherweise wird zum Anbringen bzw. Verankern einer Schraube in einem harten Werkstoff, wie beispielsweise Beton, Ziegel oder einem anderen Gestein, ein Spreizdübel verwendet.

Ein zum Stand der Technik gehörender Spreizdübel ist beispielsweise in der DE-Auslegungsschrift 1 097117 offenbart. Die DE 1 097117 zeigt dabei insbesondere einen über einen Teil seiner Länge geschlitzten, zylinderförmigen, aus zähem und alterungsbeständigem Kunststoff hergestellten Spreizdübel, dessen hinteres Ende eine Bohrung zum Einführen einer Befestigungsschraube, vorzugsweise einer Holzschraube, aufweist und dessen vorderes Ende am Dübelumfang mit sägezahnförmigen Einschnitten versehen ist.

Für das Setzen eines Dübels wird hierzu zunächst ein Loch in den Werkstoff mit Hilfe einer Bohrmaschine gebohrt. Für besonders harte Werkstoffe wird für gewöhnlich eine Bohrmaschine mit integriertem Schlagwerk oder sogar ein Bohrhammer verwendet. Durch das jeweilige Schlagwerk der Bohrmaschine bzw. des Bohrhammers wird eine hohe kinetische Energie beim Bohren freigesetzt. Diese freigesetzte kinetische Energie kann unter Umständen dazu führen, dass um das Bohrloch herum Abbruchstücke aus dem Werkstoff unkontrolliert herausbrechen können, wodurch das zu bohrende Bohrloch keine einwandfreie zylindrische Form annimmt. Es ist darüber hinaus auch möglich, dass durch den Einsatz von Bohrmaschinen mit Schlagwerk oder Bohrhämmern Risse oder Brüche entlang des Werkstoffs entstehen können, die wiederum zu einer Schwächung bzw. zu einem unkontrollierten Abbruch des Werkstoffs führen kann. Das unkontrollierte Ab- bzw. Herausbrechen von Abbruchstücken aus dem Werkstoff kann insbesondere bei der Bearbeitung eines besonders brüchigen Werkstoffs oder auch beim Bohren des Werkstoffs in unmittelbarer Nähe einer Kante, wie z.B. beim Montieren eines Treppengeländers, geschehen.

Nach Fertigstellung des Bohrlochs wird gemeinhin mit Hilfe eines Staubsaugers das beim Bohrvorgang erzeugte Bohrmehl bzw. Staub aus dem Bohrloch entfernt. Die Entfernung des Bohrmehls bzw. Staubs dient dazu Platz für den Dübel zu schaffen, der nun in das Bohrloch eingesetzt wird. Die Säuberung des Bohrlochs ist generell eine umständliche und zeitraubende Angelegenheit und wird daher auch häufig nicht vorgenommen. Ein ungereinigtes Bohrloch ist jedoch weniger gut geeignet einen Dübel ordnungsgemäß aufzunehmen und kann auch dazu führen, dass der Dübel samt eingedrehter Schraube noch vor Erreichen der maximalen Zugbelastungsgrenze wieder aus dem Bohrloch austreten kann.

Im Anschluss an das Einführen des Dübels in das fertige Bohrloch wird eine passende Schraube in den Dübel geschraubt. Hierbei ist die Wahl der richtigen Schraube entscheidend, da die zu verwendende Schraube genau die passende Länge sowie auch den passenden Querschnitt aufweisen muss.

Trotz aller technischer Fortschritte kann die Handhabung eines Dübel und einer Schraube, d.h. das Anfertigen eines Bohrlochs, das Reinigen des Bohrlochs nach dessen Fertigstellung sowie das eigentliche Einschrauben einer Schraube in den gesetzten Dübel, den Anwender vor eine Reihe von Problemen stellen oder zumindest eine aufwendig und zeitraubend sein.

Eine Aufgabe der vorliegenden Erfindung besteht darin, die vorstehend beschriebenen Probleme zu lösen und dazu ein Befestigungselement zur Befestigung an einem Werkstoff bereitzustellen, welches einfach in der Handhabung und kostengünstig ist.

Die vorstehend beschriebene Aufgabe wird durch den Gegenstand des unabhängigen Anspruch 1 gelöst. Weitere vorteilhafte Ausgestaltungsformen sind in den entsprechenden Unteransprüchen enthalten.

Die vorstehend beschriebene Aufgabe wird somit gelöst durch ein Befestigungselement zur Befestigung in einem Werkstoff, beispielsweise Beton, Ziegel oder ähnlichem, enthaltend wenigstens einen Befestigungsabschnitt, welcher in einem Werkstoff positionierbar ist, und wenigstens einen Anbindungsabschnitt.

Erfindungsgemäss enthält der Befestigungsabschnitt mindestens eine im Wesentlichen zylindrische Form und ist dazu geeignet, in eine zu dem Befestigungsabschnitt korrespondierende schlitzförmige Öffnung in dem Werkstoff positioniert zu werden. Durch diese spezifische Form des Befestigungsabschnitts kann das Befestigungselement auf einfache Art und Weise sowie kostengünstig, d.h. ohne Zuhilfenahme eines zusätzlichen Dübels, in einem Werkstoff (und insbesondere einem harten aber brüchigen Werkstoff), in eine zu dem Befestigungsabschnitt korrespondierende schlitzförmige Öffnung in dem Werkstoff positioniert werden.

Die zylindrische Form des Befestigungsabschnitts kann dabei eine kreissegmentförmige Grundfläche enthalten. Alternativ kann die Grundfläche auch eine rechteckige oder jede andere geeignete Form aufweisen.

Gemäss einer vorteilhaften Ausgestaltungsform der vorliegenden Erfindung kann vorgesehen sein, dass der Befestigungsabschnitt eine erste Oberfläche und eine zweite Oberfläche enthält, wobei die erste Oberfläche und/oder die zweite Oberfläche eine aufgestellte Strukturfläche aufweist. Die aufgestellte Struktur kann dabei in Gestalt von zahlreichen Erhebungen, wie z.B. Widerhaken oder aufgebogenen und gegen eine Einschubrichtung des Befestigungsabschnitts gerichtete Vorsprüngen verwirklicht sein. Diese aufgestellte Strukturfläche dient dazu eine Rastung bzw. einen Widerstand für den Befestigungsabschnitt gegen ein Herausziehen des Befestigungselements aus der zu dem Befestigungsabschnitt korrespondierenden schlitzförmigen Öffnung in dem Werkstoff bereitzustellen.

Entsprechend einer weiteren vorteilhaften Ausgestaltungsform kann wenigstens die erste Oberfläche des Befestigungsabschnitts eine Anzahl an Bohrungen aufweisen. Die Bohrungen dienen dazu die erste und/oder zweite Oberfläche zu vergrößern sowie aufzurauen, damit ein optional zu verwendender Klebstoff besser an diesen Oberflächen haften und eine verbesserte stoffschlüssige Verbindung zwischen dem Befestigungsabschnitt und der schlitzförmigen Öffnung in dem Werkstoff erzeugt werden kann.

Darüber hinaus kann vorgesehen sein, dass der Anbindungsabschnitt in Form wenigstens eines Gewindestifts ausgestaltbar ist. Durch diese besondere Ausgestaltungsform können auf einfache Art und Weise weitere Vorrichtungen, wie z.B. Installationen, an das Befestigungselement geschraubt werden. Alternativ kann der Anbindungsabschnitt auch in jeder anderen zweckmäßigen Form eines Verbindungselements, wie z.B. eines Hakens, eines Bolzen oder ähnliches, gestaltet sein.

Dadurch, dass der Anbindungsabschnitt gemäss einer vorteilhaften Ausführung in Form einer Montageschiene ausgestaltbar sein kann, können auf einfache Art und Weise weitere Vorrichtungen oder Bauteile installiert werden.

Weitere Vorteile ergeben sich aus der folgenden Zeichnungsbeschreibung. In der Zeichnung ist ein Ausführungsbeispiel der vorliegenden Erfindung dargestellt. Die Zeichnung, die Beschreibung und die Ansprüche enthalten zahlreiche Merkmale in Kombination. Der Fachmann wird die Merkmale zweckmässigerweise auch einzelnen betrachten und zu sinnvollen weiteren Kombinationen zusammenfassen.

Es zeigt:
- Fig. 1: eine perspektivische Ansicht eines erfindungsgemässen Befestigungselements mit einem Befestigungsabschnitt und einem Anbindungsabschnitt in Form von zwei Gewindestiften gemäß einer ersten Ausführungsform;
- Fig. 2: eine perspektivische Ansicht des erfindungsgemässen Befestigungselements mit dem Befestigungsabschnitt und dem Anbindungsabschnitt in Form von zwei Gewindestiften gemäß einer zweiten Ausführungsform;
- Fig. 3: eine perspektivische Ansicht des erfindungsgemässen Befestigungselements mit dem Befestigungsabschnitt und dem Anbindungsabschnitt in Form einer Montageschiene gemäß einer dritten Ausführungsform;
- Fig. 4: eine weitere perspektivische Ansicht des erfindungsgemässen Befestigungselements mit dem Befestigungsabschnitt und dem Anbindungsabschnitt in Form einer Montageschiene gemäß einer dritten Ausführungsform;

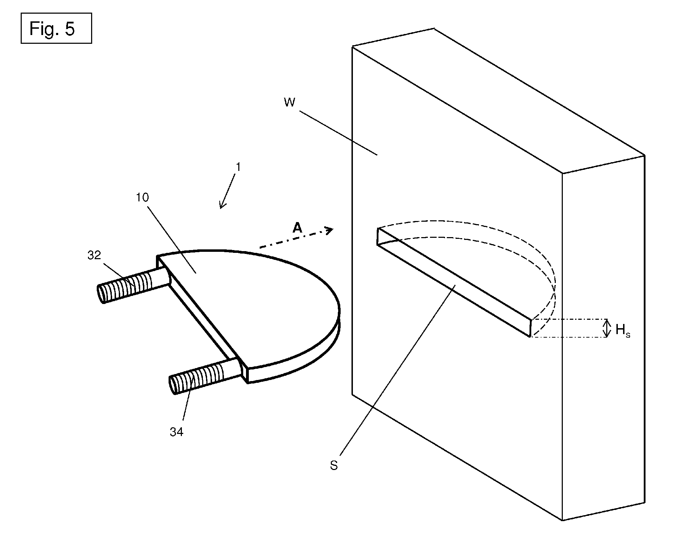

- Fig. 5: eine perspektivische Ansicht des erfindungsgemässen Befestigungselements gemäß der ersten Ausführungsform und einer Wand mit einer zu dem Befestigungsabschnitt korrespondierenden schlitzförmigen Öffnung;
- Fig. 6: eine perspektivische Ansicht des erfindungsgemässen Befestigungselements mit dem Befestigungsabschnitt und dem Anbindungsabschnitt in Form von zwei Gewindestiften gemäß einer vierten Ausführungsform;
- Fig. 7: eine perspektivische Ansicht eines Werkstücks mit einer zu dem Befestigungsabschnitt gemäß der vierten Ausführungsform korrespondierenden schlitzförmigen Öffnung;
- Fig. 8: eine perspektivische Ansicht des erfindungsgemässen Befestigungselements gemäß der vierten Ausführungsform und des Werkstücks mit der zu dem Befestigungsabschnitt gemäß der vierten Ausführungsform korrespondierenden schlitzförmigen Öffnung; und
- Fig. 9: eine weitere perspektivische Ansicht des erfindungsgemässen Befestigungselements gemäß der vierten Ausführungsform und des Werkstücks mit der zu dem Befestigungsabschnitt gemäß der vierten Ausführungsform korrespondierenden schlitzförmigen Öffnung.

### Ausführungsbeispiele der Erfindung

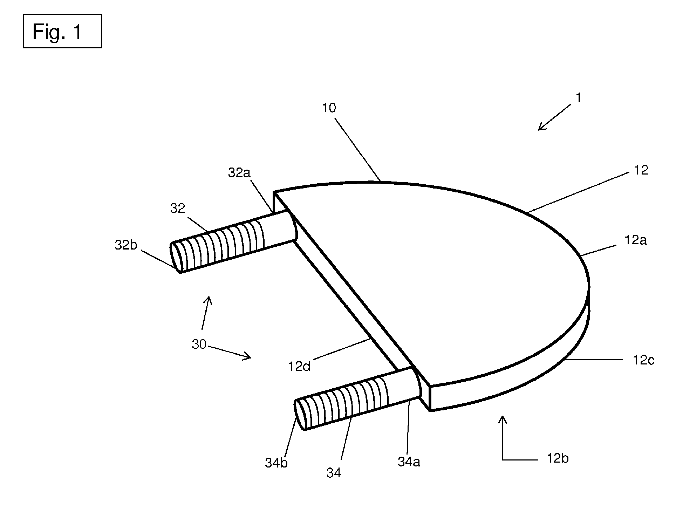

In Fig. 1 ist eine perspektivische Ansicht einer ersten Ausführungsform des erfindungsgemässen Befestigungselements 1, welches dazu geeignet ist an einem Werkstoff W, beispielsweise Beton, Ziegel, Holz oder ähnlichem, befestigt zu werden. Es ist möglich, dass zusätzlich ein Klebstoff verwendet wird, um eine stoffschlüssige Anbindung des Befestigungselements 1 in dem Werkstoff W zu erzeugen.

Das Befestigungselement 1 enthält im Wesentlichen einen Befestigungsabschnitt 10, welcher in dem Werkstoff positionierbar ist, und ein Anbindungsabschnitt 30.

Der Befestigungsabschnitt 10 enthält im Wesentlichen einen zylindrischen Grundkörper 12 mit einer kreissegmentförmigen Grundfläche ausgestaltet. Der Grundkörper 12 enthält wiederum eine erste Oberfläche 12a, eine zweite Oberfläche 12b, eine Aussenfläche 12c und eine Stirnseite 12d. Wie nachfolgend in mehr Details beschrieben, kann auf die erste Oberfläche 12a und zweite Oberfläche 12b ein (nicht gezeigter) Klebstoff aufgetragen werden, um eine stoffschlüssige Anbindung des Befestigungselements 1 in dem Werkstoff W zu erzeugen. Alternativ kann hierzu auch ein Kit, Mörtel oder ähnliches verwendet werden.

Wie in Fig. 1, 2 und 4 gezeigt, ist das Anbindungsabschnitt 30 in Form eines ersten Gewindestifts 32 und eines zweiten Gewindestifts 34 ausgestaltet. Der erste Gewindestifte 32 enthält eine erstes Ende 32a und eine zweites Ende 32b. Der zweite Gewindestift 34 enthält ebenfalls ein erstes Ende 34a und ein zweites Ende 34b. Die beiden Gewindestifte 32, 34 sind jeweils mit dem entsprechenden ersten Ende 32a, 34a an der Stirnseite 12d des Befestigungsabschnitts 10 befestigt. Die Gewindestifte 32, 34 dienen dazu, dass weitere (nicht gezeigte) Bauteile oder Vorrichtungen wiederlösbar an das Befestigungselement 1 geschraubt werden können.

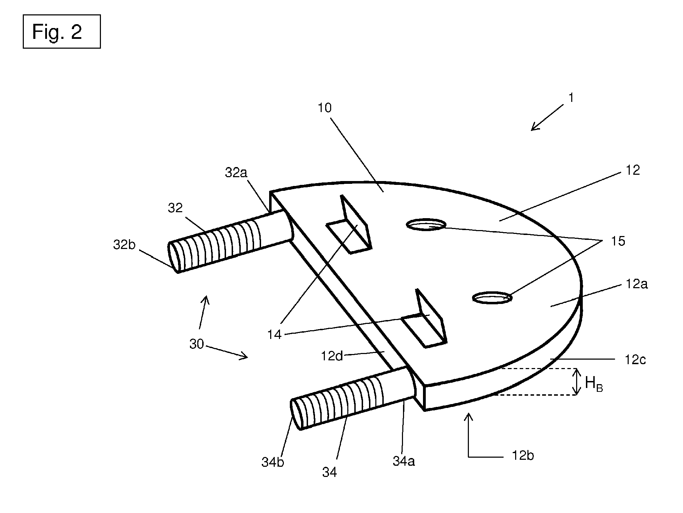

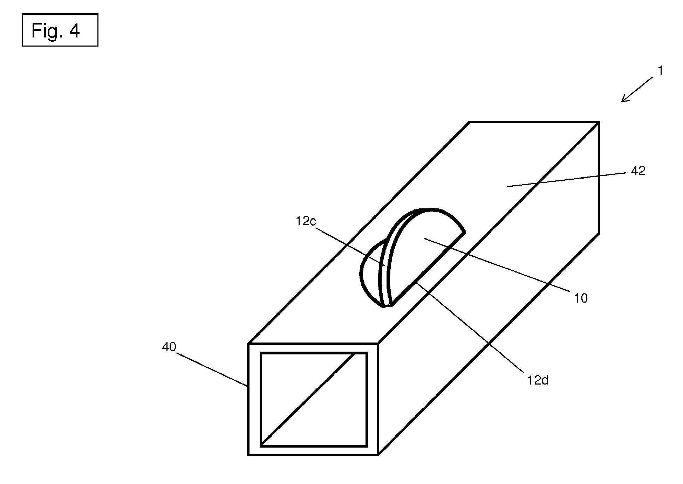

Wie in Fig. 2 gezeigt, ist gemäss einer zweiten Ausführungsform des erfindungsgemässen Befestigungselements 1 an der ersten Oberfläche 12a und an der zweiten Oberfläche 12b des Grundkörpers 12 eine Strukturfläche 13 vorgesehen. Bei der Strukturfläche 13 handelt es sich um eine Anzahl an Abschnitten 14 des Befestigungsabschnitts 10, die so von der ersten Oberfläche 12a und der zweiten Oberfläche 12b des Befestigungsabschnitts 10 aufgebogen sind, dass diese als eine Art von Widerhaken zum Halten des Befestigungsabschnitts 10 in dem Werkstoff W fungieren. Die Abschnitte 14 des Befestigungsabschnitts 10 sind dabei so aufgebogen, dass diese gegen die Einschubrichtung A (vgl. Fig. 4) des Befestigungsabschnitts 10 in den Werkstoff W gerichtet sind. Hierdurch wird ein zu leichtes Herausziehen des Befestigungselements 10 aus dem Werkstoff W verhindert. Alternativ oder zusätzlich zu den aufgebogenen Abschnitten 14 des Befestigungsabschnitts 10 kann die erste Oberfläche 12a und/oder zweite Oberfläche 12b des Befestigungsabschnitts 10 eine Anzahl an Bohrungen 15 enthalten. Die Bohrungen 15 dienen dazu die erste und zweite Oberfläche 12a, 12b des Befestigungsabschnitts 10 zu vergrößern und eine bessere Anhaftung eines (nicht gezeigten) Klebstoffs an den Oberflächen 12a, 12b des Befestigungsabschnitts 10 zu erzeugen.

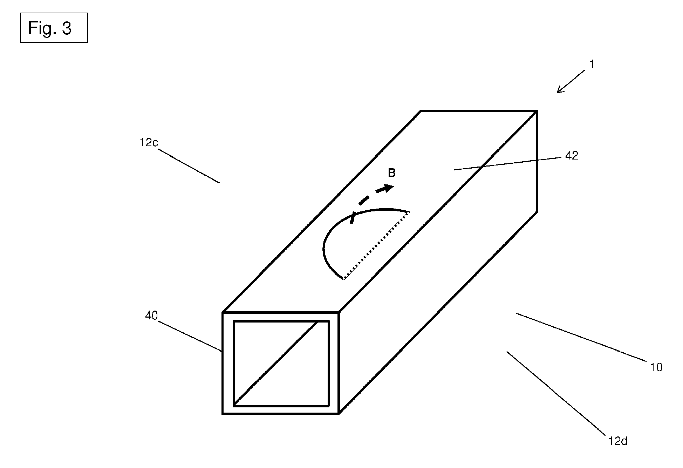

In Fig. 3 und 4 ist eine dritte Ausführungsform des erfindungsgemässen Befestigungselements 1 gezeigt. Bei dieser dritten Ausführungsform ist das Anbindungsabschnitt 30 in Form einer Montageschiene 40 gestaltet. Der Befestigungsabschnitt 10 ist hierzu an wenigstens einer Außenseite 42 der Montageschiene 40 so befestigt, dass sich dieser rechtwinklig von der Oberfläche 43 der Außenseite 42 der Montageschiene 40 erstreckt.

Wie in Fig. 3 ebenfalls gezeigt, ist es dabei auch möglich, dass der Befestigungsabschnitt 10 entlang dessen Außenfläche 12c aus der Außenseite 42 der Montageschiene 40 geschnitten bzw. gestanzt ist und rechtwinklig zur Außenseite 42 der Montageschiene 40 gebogen wird. Die Stirnseite 12d des Befestigungsabschnitts 10 verbleibt dabei fest mit der Außenseite 42 der Montageschiene 40 verbunden.

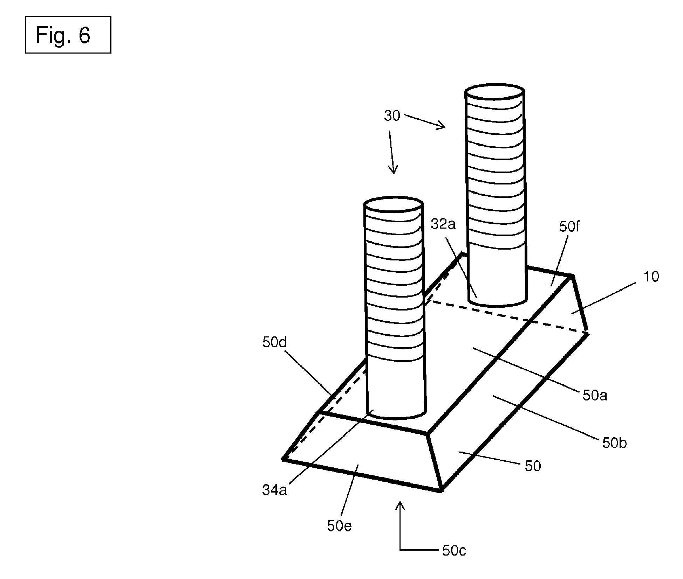

In Fig. 6 bis 9 ist eine vierte Ausführungsform des erfindungsgemässen Befestigungselements 1 dargestellt. Bei dieser vierten Ausführungsform ist der Befestigungsabschnitt 10 in Form eines zylindrischen Grundkörpers 50 mit einem trapezförmigen Querschnitt ausgestaltet. Konkret ist der Querschnitt in Form eines gleichschenkligen Trapezes. Alternativ kann jedoch der Querschnitt auch in Form eines nicht-gleichschenkligen Trapezes ausgebildet sein. Der zylindrische Grundkörper 50 enthält eine erste Seitenfläche 50a, eine zweite Seitenfläche 50b, eine dritte Seitenfläche 50c, eine vierte Seitenfläche 50d, eine fünfte Seitenfläche 50e und eine sechste Seitenfläche 50f. An der ersten Seitenfläche 50a ist der Anbindungsabschnitt 30 befestigt. Gemäß der vierten Ausführungsform ist der Anbindungsabschnitt 30 in Form des ersten Gewindestifts 32 und des zweiten Gewindestifts 34 ausgestaltet. Die beiden Gewindestifte 32, 34 sind jeweils mit dem entsprechenden ersten Ende 32a, 34a an der ersten Seitenfläche des Befestigungsabschnitts 10 befestigt.

Zur Anbringung des Befestigungselements 1 entsprechend der ersten, zweiten und dritten Ausführungsform an einem Werkstoff W, wie z.B. einer Betonwand, wird zunächst mit Hilfe einer (nicht gezeigten) Kreissäge, Trennschleifers, Winkelschleifers oder ähnlichem ein länglicher Schlitz S in die Wand (d.h. in den Werkstoff W) geschnitten (vgl. Fig. 4). Die Länge des Schlitzes S kann dabei nahezu beliebig lang sein, d.h. die Länge dieses Schlitzes S muss nicht gezwungenermassen genau der Länge des Befestigungsabschnitts 10 (entspricht Länge der Stirnseite 12d) entsprechen. Die Höhe H_{S} des Schlitzes S hat jedoch im Wesentlichen der Höhe H_{B} des Befestigungsabschnitts 10 zu entsprechen. Es ist möglich, dass der Schlitz S etwas höher ist als der Befestigungsabschnitt 10.

Vorteilhafterweise ist durch die Verwendung einer Werkzeugmaschine (Kreissäge, Trennschleifers, Winkelschleifers oder ähnlichem) mit einem rotierenden Werkzeug (rundes Sägeblatt) der geschnittene Schlitz automatisch frei von Staub bzw. Schmutz. Das rotierende Werkzeug (rundes Sägeblatt) erzeugt für gewöhnlich eine so große Luftverwirbelung, dass kein Staub bzw. Schmutz in dem Schlitz S verbleibt.

Nachdem der automatisch gereinigte Schlitz S in die Wand geschnitten ist, kann das Befestigungselement 1 an die Wand angebracht werden. Hierzu wird der Befestigungsabschnitt 10 in Richtung A in die Wand (d.h. in den Werkstoff W) geschoben. Der Anbindungsabschnitt 30 verbleibt außerhalb der Wand. Durch ein Verkeilen des Befestigungsabschnitts 10 in dem Schlitz S sowie optional durch ein Verkleben des Befestigungsabschnitts 10 in dem Schlitz S ist das Befestigungselement 1 so mit der Wand verbunden, dass an dem Anbindungsabschnitt 30 zusätzliche (nicht dargestellte) Bauteile oder Vorrichtungen montiert werden können.

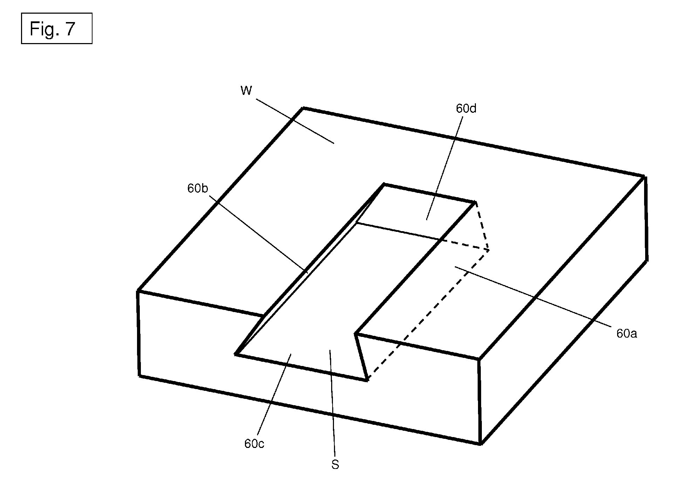

Zur Anbringung des Befestigungselements 1 entsprechend der vierten Ausführungsform an einem Werkstoff W, wie z.B. einer Betonwand, wird, ähnlich wie bei der Anbringung des Befestigungselements 1 entsprechend der ersten, zweiten und dritten Ausführungsform, zunächst länglicher Schlitz S in die Wand (d.h. in den Werkstoff W) geschnitten. Wie in Fig. 7, 8 und 9 gezeigt, muss der Schlitz S zum Einführen des Befestigungsabschnitts 10 (gemäß der vierten Ausführungsform) in der Wand W einen Querschnitt aufweisen, der zu dem trapezförmigen Querschnitt des zylindrischen Grundkörpers 50 korrespondiert. Mit anderen Worten, der Schlitz S muss ebenfalls einen trapezförmigen Querschnitt aufweisen. Der trapezförmige Schlitz S enthält eine erste Seitenfläche 60a, eine zweite Seitenfläche 60b, eine dritte Seitenfläche 60c und eine vierte Seitenfläche 60d. Des Weiteren ist der trapezförmige Schlitz S so in dem Werkstoff W positioniert, dass die dritte (und damit längste) Seitenfläche 60c die Grundfläche des trapezförmigen Schlitzes S in dem Werkstoff W darstellt.

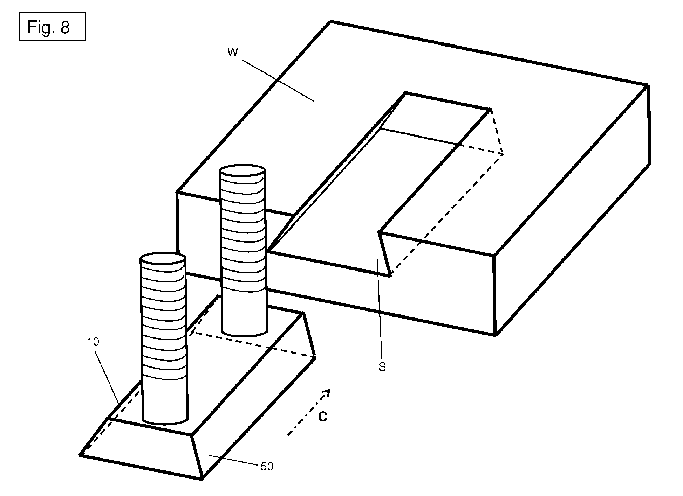

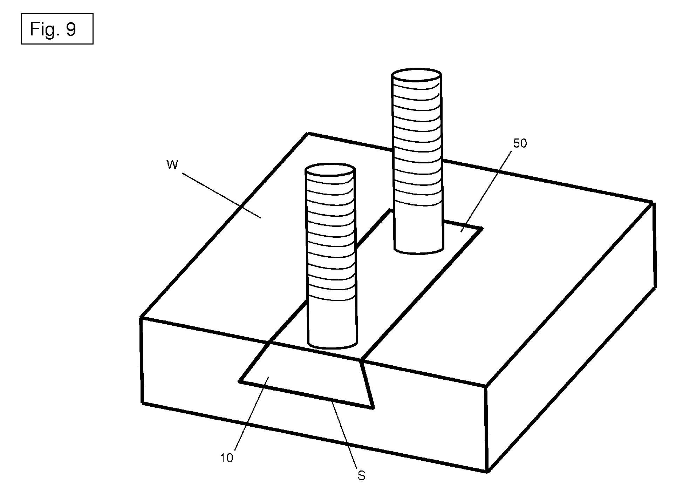

Wie in Fig. 8 und 9 gezeigt, kann der trapezförmige Befestigungsabschnitt 10 somit entlang der Richtung C (vgl. Fig. 8) in den korrespondierenden trapezförmigen Schlitz S eingeführt werden. Durch die Trapezform des Befestigungsabschnitts 10 und des Schlitzes S können noch höhere Zugkräfte an dem Befestigungsabschnitt 10 wirken, ohne dass der Befestigungsabschnitt 10 und folglich das Befestigungselement 1 aus dem Schlitz S in dem Werkstoff herausgezogen wird.

Durch diese spezifische Form des Befestigungsabschnitts 10 kann das Befestigungselement 1 auf einfache Art und Weise sowie kostengünstig, d.h. ohne Zuhilfenahme eines zusätzlichen Dübels, in einem Werkstoff W (und insbesondere einem harten aber brüchigen Werkstoff), in eine zu dem Befestigungsabschnitt 10 korrespondierende schlitzförmige Öffnung (Schlitz S) in dem Werkstoff W positioniert werden.

## Patentansprüche

1. Befestigungselement (1) zur Befestigung an einem Werkstoff (W), beispielsweise Beton, Ziegel oder ähnlichem, enthaltend
- wenigstens einen Befestigungsabschnitt (10), welcher in einem Werkstoff (W) positionierbar ist, und
- wenigstens einen Anbindungsabschnitt (30),
**dadurch gekennzeichnet, dass** der Befestigungsabschnitt (10) mindestens eine im Wesentlichen zylindrische Form enthält und dazu geeignet ist, in eine zu dem Befestigungsabschnitt korrespondierende schlitzförmige Öffnung (S) in dem Werkstoff (W) positioniert zu werden.

2. Befestigungselement (1) nach Anspruch 1,
**dadurch gekennzeichnet, dass** der Befestigungsabschnitt (10) eine erste Oberfläche (12a) und eine zweite Oberfläche (12b) enthält, wobei die erste Oberfläche (12a) und/oder die zweite Oberfläche (12b) eine aufgestellte Strukturfläche (13) aufweist.

3. Befestigungselement (1) nach Anspruch 1 oder 2,
**dadurch gekennzeichnet, dass** wenigstens die erste Oberfläche (12a) des Befestigungsabschnitts (10) eine Anzahl an Bohrungen (15) aufweist.

4. Befestigungselement (1) nach wenigstens einem der Ansprüche 1 bis 3,
**dadurch gekennzeichnet, dass** der Anbindungsabschnitt (30) in Form wenigstens eines Gewindestifts (32, 34) ausgestaltbar ist.

5. Befestigungselement (1) nach wenigstens einem der Ansprüche 1 bis 3,
**dadurch gekennzeichnet, dass** der Anbindungsabschnitt (30) in Form einer Montageschiene (40) ausgestaltbar ist.
